# EUROPEAN PATENT APPLICATION

(11) **EP 3 862 777 A1**
(43) Date of publication of application: **11.08.2021**
(21) Application number: 19869756.7
(22) Date of filing: 24.09.2019
(51) Int. Cl.: G01S 7/481, G01J 1/02, G01J 5/02

(54) **ELECTROMAGNETIC WAVE DETECTION DEVICE AND INFORMATION ACQUISITION SYSTEM**

(30) Priority: 05.10.2018 JP 2018190463
(71) Applicant: Kyocera Corporation, Kyoto-shi, Kyoto 612-8501 (JP)
(72) Inventor: OKADA Hiroki, Kyoto-shi, Kyoto 612-8501 (JP)
(74) Representative: Viering, Jentschura & Partner mbB Patent- und Rechtsanwälte
(86) International application number: PCT/JP2019/037346
(87) International publication number: WO 2020/071180

(57) **Abstract**

An object is efficiently scanned across thereof using electromagnetic waves. An electromagnetic wave detection apparatus includes a switching unit, a controller, and a first detector. The switching unit includes a plurality of subdivisions that are arranged on a reference surface and can be switched to a first state for causing incident electromagnetic waves to progress in a first direction. The controller is configured to simultaneously set some of the plurality of subdivisions located apart from one another along at least one direction of the reference surface, from among the plurality of subdivisions, to the first state. The first detector is configured to detect electromagnetic waves progressing in the first direction.

## Description

### CROSS REFERENCE TO RELATED APPLICATION

This application claims priority to and the benefit of Japanese Patent Application No. 2018-190463 filed on October 5, 2018, the entire contents of which are incorporated herein by reference.

### TECHNICAL FIELD

The present disclosure relates to an electromagnetic wave detection apparatus and an information acquisition system.

### BACKGROUND

In recent years, apparatuses configured to acquire information regarding surroundings thereof from a detection result of electromagnetic waves are developed. For example, an apparatus configured to measure a position of an object in an image captured by an infrared camera, using a laser radar is known (see PTL 1).

### CITATION LIST

### Patent Literature

PTL 1: JP-A-2011-220732

### SUMMARY

In order to solve the above problems, an electromagnetic wave detection apparatus according to a first aspect includes a switching unit, a controller, and a first detector. The switching unit includes a plurality of subdivisions that are arranged on a reference surface and can be switched to a first state for causing incident electromagnetic waves to progress in a first direction. The controller is configured to simultaneously set some of the plurality of subdivisions located apart from one another along at least one direction of the reference surface, from among the plurality of subdivisions, to the first state. The first detector is configured to detect electromagnetic waves progressing in the first direction.

Further, an information acquisition system according to a second aspect includes a switching unit, a controller, and a first detector. The switching unit includes a plurality of subdivisions that are arranged on a reference surface and can be switched to a first state for causing incident electromagnetic waves to progress in a first direction. The controller is configured to simultaneously set some of the plurality of subdivisions located apart from each other along at least one direction of the reference surface, from among the plurality of subdivisions, to the first state. The first detector is configured to detect electromagnetic waves progressing in the first direction.

Although the apparatus and the system have been described above as the solutions according to the present disclosure, it should be understood that the present disclosure can also be realized by modes that include them, a method or a program that substantially corresponds to them, or a storage medium that stores the program, which are thus included in the scope of the present disclosure.

### BRIEF DESCRIPTION OF THE DRAWINGS

In the accompanying drawings:
FIG. 1 is a diagram illustrating a schematic configuration of an electromagnetic wave detection apparatus according to an embodiment;
FIG. 2 is a diagram illustrating an example operation of a scanner illustrated in FIG. 1;
FIG. 3 is a diagram illustrating another example operation of the scanner illustrated in FIG. 1;
FIG. 4 is a diagram illustrating a schematic configuration of a switching unit illustrated in FIG. 1;
FIG. 5 is a diagram illustrating an example state of the switching unit illustrated in FIG. 1;
FIG. 6 is a diagram illustrating another example state of the switching unit illustrated in FIG. 1;
FIG. 7 is a diagram illustrating another example state of the switching unit illustrated in FIG. 1;
FIG. 8 is a diagram illustrating another example state of the switching unit illustrated in FIG. 1;
FIG. 9 is a diagram illustrating another example state of the switching unit illustrated in FIG. 1; and
FIG. 10 is a diagram illustrating a schematic configuration of an example variation of the electromagnetic wave detection apparatus according to the embodiment.

### DETAILED DESCRIPTION

An electromagnetic wave detection apparatus can acquire more detailed information regarding a measuring object by scanning across the measuring object using electromagnetic waves than that acquired by, for example, radiating electromagnetic waves to one spot on the measuring object. Thus, it is useful for the electromagnetic wave detection apparatus to scan across the measuring object using electromagnetic waves.

The electromagnetic wave detection apparatus can scan across the measuring object using electromagnetic waves by changing a radiation direction of the electromagnetic waves. Here, when the radiation direction to radiate the electromagnetic waves is changed, a position (an irradiation position) on the measuring object at which the electromagnetic waves are reflected can be displaced. When the position on the measuring object at which electromagnetic waves are reflected is changed, a direction in which electromagnetic waves arrive in the electromagnetic wave detection apparatus can be changed. Accordingly, for the purpose of preventing erroneous detection, the electromagnetic wave detection apparatus uses, for example, a DMD (Digital Micro mirror Device) to selectively detect electromagnetic waves arriving from a direction corresponding to the radiation direction of the electromagnetic waves. The DMD includes a plurality of minute reflection surfaces arranged in two-dimensions. The electromagnetic wave detection apparatus switches the minute reflection surfaces corresponding to the radiation direction of electromagnetic waves, from among the plurality of minute reflection surfaces included in the DMD, to a predetermined inclined state and thus selectively detects electromagnetic waves arriving from the direction corresponding to the radiation direction of the electromagnetic waves. When scanning across the measuring object using electromagnetic waves, the electromagnetic wave detection apparatus suppresses erroneous detection by switching the minute reflection surfaces of the DMD corresponding to the radiation direction of the electromagnetic waves to the predetermined inclined state, every time the radiation direction of the electromagnetic waves is changed.

However, when scanning across the measuring object using electromagnetic waves, switching minute reflective surfaces of the DMD corresponding to a radiation direction of electromagnetic waves to the predetermined inclined state every time the radiation direction of electromagnetic waves is changed may inhibit efficient scanning across the measuring object using electromagnetic waves.

As such, an electromagnetic wave detection apparatus according to the present disclosure is configured to efficiently scan across a measuring object using electromagnetic waves and thus can efficiently scan across the measuring object using electromagnetic waves. Hereinafter, embodiments pertain to the present disclosure will be described with reference to the drawings.

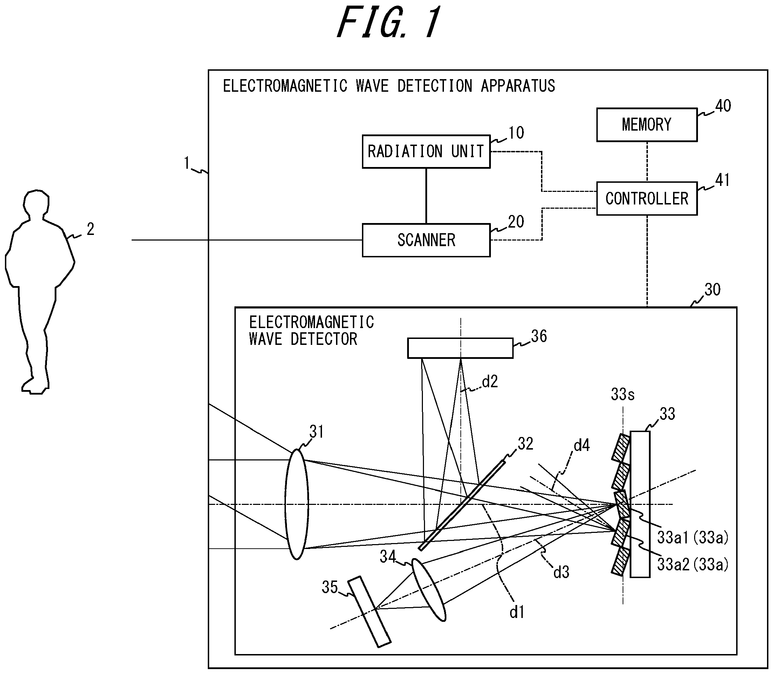

An electromagnetic wave detection apparatus 1 includes an electromagnetic wave detector 30, a memory 40, and a controller 41, as illustrated in FIG. 1. The electromagnetic wave detection apparatus 1 may further include a radiation unit 10 and a scanner 20.

In FIG. 1, a broken line connecting each functional block indicates a flow of a control signal or information. A solid line protruding from each functional block indicates a flow of electromagnetic waves.

The radiation unit 10 radiates electromagnetic waves under the control of the controller 41. The radiation unit 10 may radiate at least one of infrared rays, visible rays, ultraviolet rays, and radio waves. In the present embodiment, the radiation unit 10 radiates infrared rays. Electromagnetic waves radiated from the radiation unit 10 is radiated to an object 2 via the scanner 20.

The radiation region 11 may include at least one of a laser diode (LD: Laser Diode), a light emitting diode (LED: Light Emitting Diode), a vertical cavity surface emitting laser (VCSEL: Vertical Cavity Surface Emitting Laser), a photonic crystal laser, a gas laser, and a fiber laser. In the present embodiment, the radiation unit 10 includes a laser diode. An example of the laser diode may include a Fabry-Perot laser diode or the like.

The scanner 20 changes a direction of electromagnetic waves radiated from the radiation unit 10, based on the control by the controller 41. Electromagnetic waves whose direction is changed by the scanner is radiated toward the object 2. The scanner 20 may include any one of an MEMS mirror, a galvano mirror, and a polygon mirror. In the present embodiment, the scanner 20 includes a biaxial MEMS mirror.

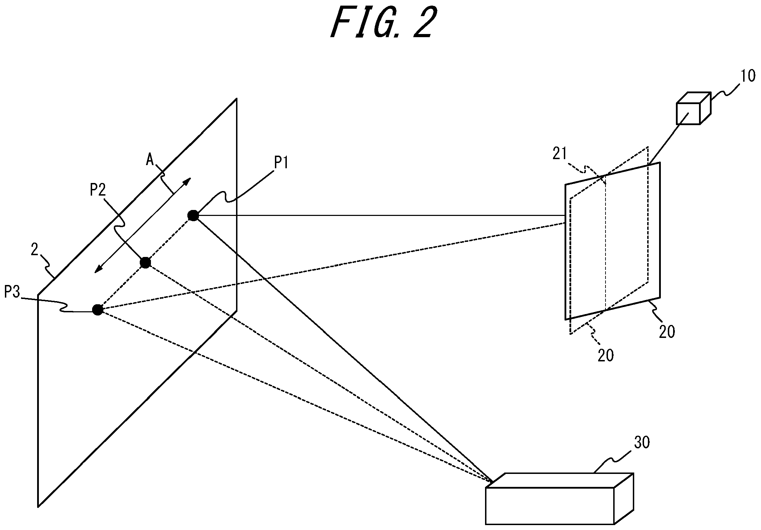

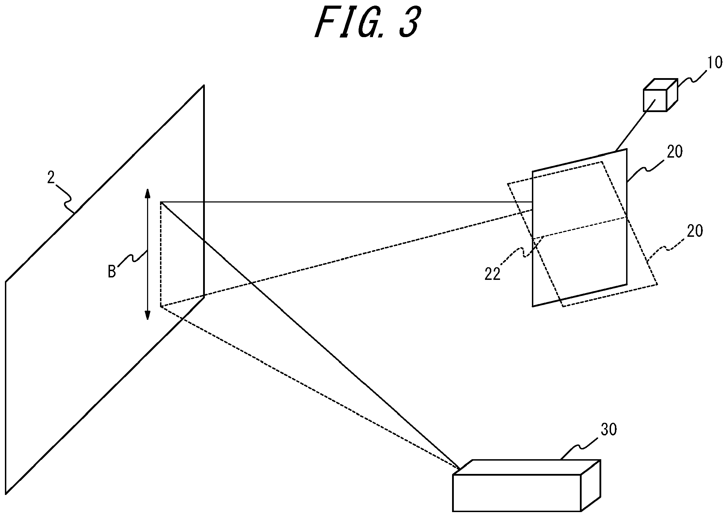

The scanner 20 changes a direction of electromagnetic waves by reflecting the electromagnetic waves radiated by the radiation unit 10. The scanner 20 can rotate about an axis 21 and an axis 22 orthogonal to each other, as respectively illustrated in FIG. 2 and FIG. 3.

The scanner 20 changes a reflecting direction of electromagnetic waves by rotating about the axis 21, as illustrated in FIG. 2. The electromagnetic wave detection apparatus 1 configured in this manner can scan across the object 2 using electromagnetic waves along a direction A orthogonal to the axis 21.

The scanner 20 changes the reflecting direction of electromagnetic waves by rotating about the axis 22, as illustrated in FIG. 3. The electromagnetic wave detection apparatus 1 configured in this manner can scan across the object 2 using electromagnetic waves along a direction B orthogonal to the axis 22.

An irradiation position of electromagnetic waves on the object 2 is displaced according to the direction of the electromagnetic waves changed by the scanner 20. For example, when the scanner 20 changes a direction of electromagnetic waves as illustrated in FIG. 2, the irradiation position of the electromagnetic waves on the object 2 can be displaced between a position PI, a position P2, and a position P3. When the irradiation position of the electromagnetic waves on the object 2 is displaced, the direction in which the electromagnetic waves arrive at the electromagnetic wave detector 30 may change. As illustrated in FIG. 2, for example, a direction in which electromagnetic waves reflected at the position P1 arrive at the electromagnetic wave detector 30, a direction in which electromagnetic wave reflected at the position P2 arrive at the electromagnetic wave detector 30, and a direction in which electromagnetic waves reflected at the position P3 arrive at the electromagnetic wave detector 30 are different from one another.

The scanner 20 may include an angle sensor such as, for example, an encoder. In this configuration, the scanner 20 may notify the controller 41 of an angle detected by the angle sensor as direction information used for reflecting electromagnetic waves. In such a configuration, the controller 41 can calculate the irradiation position on the object 2, based on the direction information acquired from the scanner 20. The controller 41 can calculate the irradiation position on the object 2, based on a driving signal input to the scanner 20 to change the reflecting direction of electromagnetic waves.

The electromagnetic wave detector 30 includes a front-stage optical system 31, a switching unit 33, a rear-stage optical system 34, and a first detector 35, as illustrated in FIG. 1. The electromagnetic wave detector 30 may further include a separator 32 and a second detector 36.

The front-stage optical system 31 forms an image of the object 2. The front-stage optical system 31 may include at least one of a lens and a mirror.

The separator 32 is arranged between the front-stage optical system 31 and a primary image forming position where the front-stage optical system 31 forms an image of the object 2 that is located at a predetermined distance from the front-stage optical system 31. The separator 32 is configured to separate incident electromagnetic waves into electromagnetic waves to progress in a progression direction d1 toward the switching unit 33 and electromagnetic waves to progress in a progression direction d2 (a third direction) toward the second detector 36.

In one embodiment, the separator 32 reflects a part of incident electromagnetic waves in the progression direction d2 and transmits another part of the incident electromagnetic waves in the progression direction d1. The separator 32 may transmit a part of incident electromagnetic waves in the progression direction d1 and transmit another part of the incident electromagnetic waves in the progression direction d2. Further, the separator 32 may refract a part of incident electromagnetic waves in the progression direction d1 and refract another part of the incident electromagnetic waves in the progression direction d2. The separator 32 may include at least one of a half mirror, a beam splitter, a dichroic mirror, a cold mirror, a hot mirror, a metasurface, a deflection element, and a prism.

The switching unit 33 is arranged on a path of electromagnetic waves progressing in the progression direction d1 from the separator 32. Further, the switching unit 33 is located at or in the vicinity of the primary image forming position where the front-stage optical system 31 forms an image of the object 2 that is located at the predetermined distance from the front-stage optical system 31, in the progression direction d1 from the separator 32. In the present embodiment, the switching unit 33 is arranged at the image forming position.

The switching unit 33 has a reference surface 33s on which electromagnetic waves having passed through the front-stage optical system 31 and the separator 32 are to be incident. The reference surface 33s includes a plurality of switching elements 33a arranged in two-dimensions. The reference surface 33s is a surface that causes an action such as, for example, reflection or transmission of electromagnetic waves in at least one of a first state and a second state, which will be described later.

The switching unit 33 can switch electromagnetic waves incident on the reference surface 33s having progressed in the progression direction d1 between the first state for causing the electromagnetic waves to progress in an on-direction d3 (a first direction) and the second state for directing the electromagnetic waves to progress in an off-direction d4 (a second direction), for each of the switching elements 33a. In the present embodiment, the first state is a first reflection state for reflecting the electromagnetic waves incident on the reference surface 33s in the on-direction d3. Also, the second state is a second reflection state for causing the electromagnetic waves incident on the reference surface 33s to progress in the off-direction d4.

In the present embodiment, the switching unit 33 includes a reflection surface for reflecting electromagnetic waves for each of the switching elements 33a. The switching unit 33 switches between the first reflection state and the second reflection state for each of the switching elements 33a by changing a direction of the reflection surface for each of the switching elements 33a.

The switching unit 33 switches each of the switching elements 33a between the first state and the second state, based on the control by the controller 41. For example, the switching unit 33 can cause electromagnetic waves incident on a switching element 33a1 to progress in the on-direction d3 by switching the switching elements 33a1 to the first state, as illustrated in FIG. 1. Simultaneously, the switching unit 33 can cause electromagnetic waves incident on a switching element 33a2 to progress in the off-direction d4 by switching the switching element 33a2 to the second state.

In the present embodiment, the switching unit 33 includes a DMD The DMD can switch between an inclination state in which the minute reflection surface for each of the switching element 33a is inclined at +12 degrees and an inclination state in which the minute reflection surface for each of the switching element 33a is inclined at -12 degrees, both with respect to the reference surface 33s, by driving the minute reflection surfaces constituting the reference surface 33s. The reference surface 33s is parallel to a plate surface of a substrate having the minute reflection surfaces of the DMD mounted thereon. The minute reflection surfaces of the DMD are also referred to as micromirror surfaces (micromirrors). In other words, the switching elements 33a include the respective micromirror surfaces (the micromirrors).

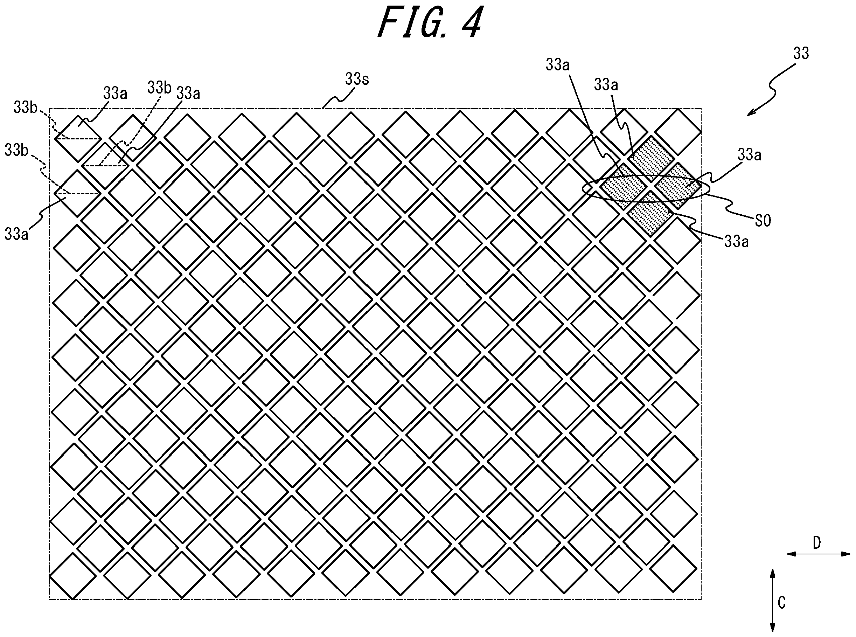

The plurality of switching elements 33a are arranged in a square grid pattern on the reference surface 33s, as illustrated in FIG. 4. The switching elements 33a include the respective quadrangular reflection surfaces. The switching elements 33a include the respective rotation axes 33b. The rotation axes 33b extend along a diagonal line of the quadrangular reflection surfaces, i.e., the micromirror surfaces. The switching elements 33a are switched between the inclination state to be inclined at +12 degrees about the rotation axis 33b with respect to the reference surface 33s and the inclination state to be inclined at -12 degrees about the rotation axis 33b with respect to the reference surface 33s. An extending direction of the rotation axes 33b of the switching elements 33a may be appropriately determined in consideration of the position of a detection surface of the first detector 35 illustrated in FIG. 1.

A spot S0 can be formed on the switching unit 33, as illustrated in FIG. 4. The spot S0 is a spot of electromagnetic waves formed on the switching unit 33 by incident electromagnetic waves reflected by the object 2, from among electromagnetic waves radiated by the radiation unit 10 illustrated in FIG. 1. A position of the spot S0 on the switching unit 33 can be displaced according to the direction in which electromagnetic waves arrive in the electromagnetic wave detector 30. Here, when a direction of electromagnetic waves reflected by the scanner 20 is changed as described above with reference to FIG. 2 and FIG. 3, the irradiation position of electromagnetic waves on the object 2 is displaced, whereby a direction in which the electromagnetic waves arrive at the electromagnetic wave detector 30 can be changed. That is, the position of the spot S0 on the switching unit 33 can be displaced according to the irradiation position of electromagnetic waves on the object 2. For example, when the irradiation position of electromagnetic waves on the object 2 is displaced along the direction A as illustrated in FIG. 2, the spot S0 is displaced along a direction D illustrated in FIG. 4. For example, when the irradiation position of electromagnetic waves on the object 2 is displaced along the direction B as illustrated in FIG. 3, the position of the spot S0 is displaced along a direction C illustrated in FIG. 4.

The spot S0 may have, for example, an elliptical shape, depending on a shape of a portion of the radiation unit 10 for emitting light. In another embodiment, the spot S0 may have a rectangular shape. In the present embodiment, a longitudinal direction of the elliptical spot S0 having the elliptical shape extends along the direction C. Further, a transverse direction of the spot S0 having the elliptical shape extends along the direction D.

The switching elements 33a are switched to the first state, based on the control by the controller 41, as described above. For example, before the spot S0 illustrated in FIG. 4 is formed, four switching elements 33a are switched to the first state, based on the control by the controller 41. Each of the four switching elements 33a includes a part of the spot S0. In this configuration, electromagnetic waves having formed the spot S0 can be reflected by the four switching elements 33a and can progress in the on-direction d3 illustrated in FIG. 1. In the subsequent drawings, the switching elements 33a in the first state are hatched.

The rotation axis 33b of the switching element 33a may extend along the direction D corresponding to the longitudinal direction of the spot S0 illustrated in FIG. 4.

As illustrated in FIG. 1, the rear-stage optical system 34 is arranged on a path of electromagnetic waves progressing in the on-direction d3 from the switching unit 33. The rear-stage optical system 34 may include at least one of a lens and a mirror. The rear-stage optical system 34 forms an image of the object 2 as electromagnetic waves whose progression direction is switched by the switching unit 33.

The first detector 35 is arranged on a path of electromagnetic waves progressing via the rear-stage optical system 34 after being caused to progress in the on-direction d3 by the switching unit 33. The first detector 35 detects electromagnetic waves having passed through the rear-stage optical system 34, that is, electromagnetic waves progressing in the on-direction d3 (the first direction).

In the present embodiment, the first detector 35 is an active sensor configured to detect electromagnetic waves (reflected waves) reflected by the object 2, from among electromagnetic waves radiated to the object 2 by the radiation unit 10 and the scanner 20.

In the present embodiment, the first detector 35 includes an element constituting a distance sensor. For example, the first detector 35 includes one element such as an APD (Avalanche Photodiode), a PD (Photodiode), a SiPM (Silicon Photomultiplier), a SPAD (Single Photon Avalanche Diode), or a distance image sensor. The first detector 35 may include an element array such as an APD array, a PD array, a distance imaging array, or a distance image sensor. The first detector 35 may include an image sensor or a temperature sensor, which will be described later.

In the present embodiment, the first detector 35 transmits detection information indicating that electromagnetic waves reflected by the object 2 are detected, as a signal to the controller 41. The first detector 35 detects electromagnetic waves in the infrared band.

Note that the first detector 35 simply needs to be able to detect electromagnetic waves in a configuration in which the first detector 35 is one element constituting the distance measuring sensor mentioned above. That is, the first detector 35 does not need to form an image on its detection surface. Thus, the first detector 35 does not need to be arranged at a secondary image forming position where the rear-stage optical system 34 forms an image. In this configuration, in other words, the first detector 35 may be arranged at any location on a path of electromagnetic waves that progress via the rear-stage optical system 34 after being caused to progress in the on-direction d3 by the switching unit 33, so long as allowing electromagnetic waves progressing from all angles of view to be incident on the detection surface of the first detector 35.

The second detector 36 is arranged on a path of electromagnetic waves progressing in the progression direction d2 from the separator 32. Further, the second detector 36 is located at or in the vicinity of an image forming position where the front-stage optical system 31 forms an image of the object 2 that is located at a predetermined distance from the front-stage optical system 31, in the progression direction d2 from the separator 32. The second detector 36 detects electromagnetic waves progressing in the progression direction d2 from the separator 32. The second detector 36 detects electromagnetic waves of a different type or the same type as electromagnetic waves detected by the first detector 35.

In the present embodiment, the second detector 36 is a passive sensor. The second detector 36 may be a sensor of a different type or the same type as the first detector 35. The second detector 36 may include an element array. For example, the second detector 36 includes an image sensor or imaging array, captures an image of electromagnetic waves formed on the detection surface, and generates image information corresponding to the captured object 2.

In the present embodiment, the second detector 36 captures an image of visible light. The second detector 36 transmits generated image information as a signal to the controller 41.

The second detector 36 may capture an image of infrared light, ultraviolet, radio waves, or the like rather than an image of visible light. Further, the second detector 36 may include a distance measuring sensor. In this configuration, the electromagnetic wave detection apparatus 1 can acquire distance information in the form of an image using the second detector 36. The second detector 36 may include a temperature sensor or the like. In this configuration, the electromagnetic wave detection apparatus 1 can acquire temperature information in the form of an image using the second detector 36.

The memory 40 illustrated in FIG. 1 may include one or more memories. The memory 40 may function as a primary storage device or a secondary storage device. The memory 40 stores any information and program used for an operation of the electromagnetic wave detection apparatus 1. The memory 40 may be included in the controller 41.

For example, the memory 40 stores a deflection pattern and a radiation pattern. The deflection pattern includes information regarding a direction in which the scanner 20 reflects electromagnetic waves when the scanner 20 changes a direction of electromagnetic waves radiated by the radiation unit 10. The radiation pattern includes timing information used for causing the radiation unit 10 to radiate electromagnetic waves. Further, the memory 40 stores the deflection pattern and the radiation pattern in association with position information of a subdivision 33u, which will be described later.

The controller 41 illustrated in FIG. 1 includes one or more processors. The processor may include at least one of a general purpose processor configured to read a specific program and perform a specific function, and a specialized processor dedicated for specific processing. The specialized processor may include an ASIC (Application Specific Integrated Circuit). The processor may include a PLD (Programmable Logic Device). The PLD may include an FPGA (Field-Programmable Gate Array). The controller 41 may include at least one of a SoC (System-on-a-Chip) that includes one or more cooperating processors and a SiP (System in a Package).

### Electromagnetic Wave Detection Process

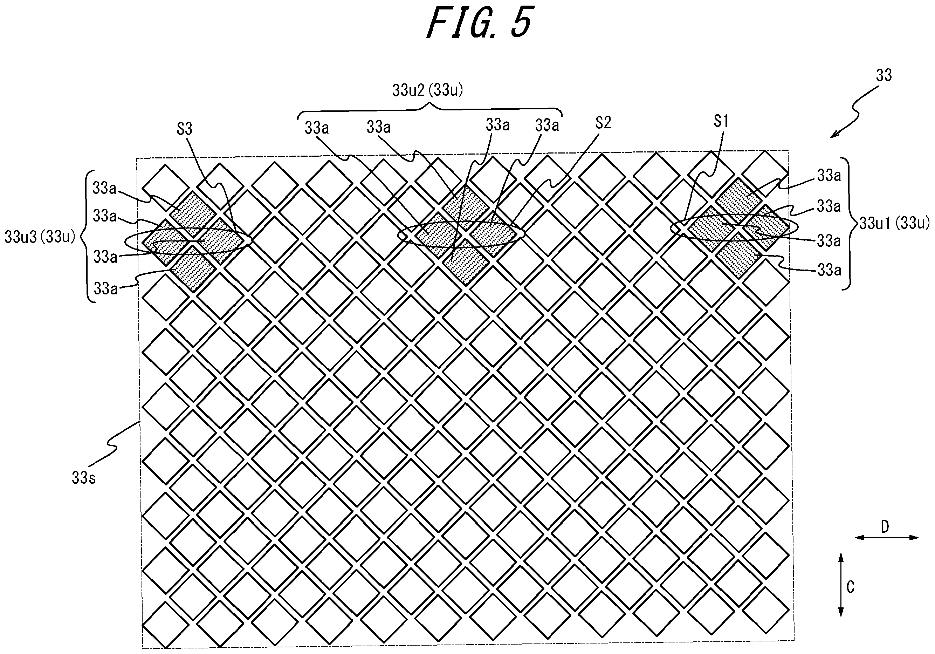

First, the controller 41 acquires the deflection pattern and the radiation pattern from the memory 40. As illustrated in FIG. 2, the deflection pattern is a pattern in which the scanner 20 rotates about the axis 21 and deflects electromagnetic waves radiated by the radiation unit 10 along the direction A illustrated in FIG. 2. The radiation pattern is a pattern in which the radiation unit 10 radiates electromagnetic waves three times at predetermined intervals. When the controller 41 controls the radiation unit 10 and the scanner 20 according to the deflection pattern and the radiation pattern, electromagnetic waves are sequentially irradiated to positions PI, P2, and P3 on the object 2 illustrated in FIG. 2. The positions PI, P2, and P3 are located on the object 2 in a linear manner and separated from one another along the direction A. Electromagnetic waves reflected at the position P1 illustrated in FIG. 2 forms a spot S1 illustrated in FIG. 5. Similarly, electromagnetic waves reflected at the position P2 and the position P3 illustrated in FIG. 2 respectively form the spot S2 and the spot S3 illustrated in FIG. 5. The spot S1 illustrated in FIG. 5 is formed at the image forming position on the reference surface 33s at the position P1 illustrated in FIG. 2 by the front-stage optical system 31. Similarly, the spot S2 and the spot S3 illustrated in FIG. 5 are formed at the image forming positions on the reference surface 33s at the position P2 and the position P3 illustrated in FIG. 2 by the front-stage optical system 31. Because electromagnetic waves are sequentially irradiated to the positions P1, P2, and P3 illustrated in FIG. 2 as described above, the spots S1, S2, and S3 illustrated in FIG. 5 are sequentially formed on the switching unit 33. Because the positions P1, P2, and P3 illustrated in FIG. 2 are located on the same straight line, the spots S1, S2, and S3 are located in the same position with respect to the direction C. In the present embodiment, the spots S1 to S3 and the like formed on the switching unit 33 have the same shapes.

Next, the controller 41 acquires position information of a plurality of subdivisions 33u associated with the deflection pattern and the radiation pattern described above from the memory 40. Further, the controller 41 causes the switching unit 33 to simultaneously set some of the plurality of subdivisions 33u to the first state. In this configuration, the some of the plurality of subdivisions 33u are subdivisions 33u1, 33u2, 33u3 illustrated in FIG. 5. The subdivisions 33u1 to 33u3 are located apart from one another along the direction D serving as at least one direction of the reference surface 33s. The subdivisions 33u1 to 33u3 are located at respective positions on the switching unit 33 where the spots S1 to S3 are formed. The switching elements 33a included in the subdivision 33u1 are arranged in a manner including the spot S1 of electromagnetic waves that can be formed in the subdivision 33u1. In other words, each of the four switching elements 33a included in the subdivision 33u1 includes a part of the spot S1 formed on the switching unit 33. Similarly, the switching elements 33a included in each of the subdivisions 33u2 and 33u3 are arranged in a manner respectively including the electromagnetic wave spots S2 and S3 formed in the subdivisions 33u2 and 33u3. In other words, each of the four switching elements 33a included in the subdivisions 33u2 includes a part of the spot S2 that can be formed on the switching unit 33, and each of the four switching elements 33a included in the subdivision 33u3 includes a part of the spot S3 that can be formed on the switching unit 33.

Subsequently, the controller 41 radiates electromagnetic waves to the position P1 on the object 2 illustrated in FIG. 2 by controlling the radiation unit 10 and the scanner 20. The electromagnetic waves reflected at the position P1 illustrated in FIG. 2 forms the spot S1 illustrated in FIG. 5. The electromagnetic wave having formed the spot S1 can be reflected by the four switching elements 33a included in the subdivision 33u1, can progress in the on-direction d3 illustrated in FIG. 1, and can then be incident on the first detector 35 illustrated in FIG. 1. Further, by setting switching elements 33a located around the subdivision 33u1 to the second state, incidence of ambient light on the first detector 35 illustrated in FIG. 1 can be suppressed. Then, the controller 41 may quickly switch the switching elements 33a included in the subdivision 33u1 to the second state.

Also, the controller 41 radiates electromagnetic waves to the position P2 of the object 2 illustrated in FIG. 2 by controlling the radiation unit 10 and the scanner 20. The electromagnetic waves reflected at the position P2 illustrated in FIG. 2 forms the spot S2 illustrated in FIG. 5. The electromagnetic waves having formed the spot S2 can be reflected by the four switching elements 33a included in the subdivision 33u2, can progress in the on-direction d3 illustrated in FIG. 1, and can then be incident on the first detector 35 illustrated in FIG. 1. Further, by setting switching elements 33a located around the subdivision 33u2 to the second state, incidence of ambient light on the first detector 35 illustrated in FIG. 1 can be suppressed. Then, the controller 41 may quickly switch the switching elements 33a included in the subdivision 33u2 to the second state.

Further, the controller 41 radiates electromagnetic waves to the position P3 of the object 2 illustrated in FIG. 2 by controlling the radiation unit 10 and the scanner 20. The electromagnetic waves reflected at the position P3 illustrated in FIG. 2 forms the spot S3 illustrated in FIG. 5. The electromagnetic waves having formed the spot S3 can be reflected by the four switching elements 33a included in the subdivision 33u3, can progress in the on-direction d3 illustrated in FIG. 1, and can then be incident on the first detector 35 illustrated in FIG. 1. Further, by setting switching elements 33a located around the subdivision 33u3 to the second state, incidence of ambient light on the first detector 35 illustrated in FIG. 1 can be suppressed. Then, the controller 41 may quickly switch the switching elements 33a included in the subdivision 33u3 to the second state.

In the present embodiment, as described above, the controller 41 causes the switching unit 33 to simultaneously set the subdivisions 33u1 to 33u3 located at the locations where the spots S1 to S3 are formed into the first state in advance. In this present embodiment, this configuration eliminates the necessity for the controller 41 to switch the switching elements 33a to the first state or the second state every time the radiation direction of electromagnetic waves is changed. Thus, the electromagnetic wave detection apparatus 1 according to the present embodiment can efficiently scan across the object 2 using electromagnetic waves.

As illustrated in FIG. 5, a distance between the subdivision 33u1 and the subdivision 33u2 in the direction D and a distance between the subdivision 33u2 and the subdivision 33u3 in the direction D may be equal to or longer than a length of the spot S1 along the direction D. This configuration can more reliably suppress incidence of ambient light on the first detector 35 illustrated in FIG. 1.

Further, the controller 41 may reduce or increase the number of the subdivisions 33u that are to be simultaneously set to the first state in advance. For example, in a case in which there is concern about an influence of ambient light due to a measuring environment, the controller 41 may reduce the number of the subdivisions 33u to be simultaneously set to the first state, based on an order of the spots formed on the switching unit 33. In a configuration illustrated in FIG. 5, the spots S1 to S3 are sequentially formed on the switching unit 33. In this configuration, the controller 41 may simultaneously set the subdivisions 33u1 and 33u2 to the first state in advance and set the subdivisions 33u3 to the second state. Further, the controller 41 may form, for example, the spot S1 on the switching unit 33 by radiating electromagnetic waves to the position P1 illustrated in FIG. 2 and then switch the subdivision 33u3 to the first state. This configuration can more reliably suppress incidence of ambient light on the first detector 35 illustrated in FIG. 1.

There are various patterns for the control described above. Hereinafter, other examples of such various patterns will be described.

### Example 1

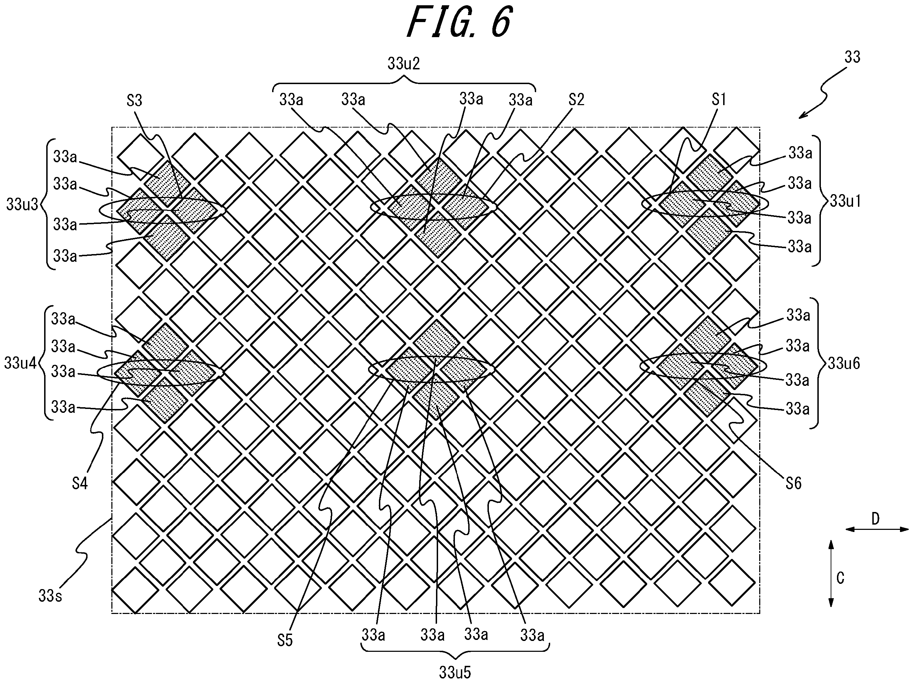

In Example 1, electromagnetic waves are radiated from the electromagnetic wave detection apparatus 1 to the object 2 so that the spots S1, S2, S3, S4, S5, and S6 are formed on the switching unit 33 as illustrated in FIG. 6. The spots S4 to S6 are located apart from one another along the direction D. The spots S4 to S6 are in the same locations with respect to the direction C. The spots S1 and spot S4 are in the same locations with respect to the direction D. The spot S2 and the spot S5 are in the same locations with respect to the direction D. The spot S3 and the spot S6 are in the same locations with respect to the direction D. A distance between the spots S1 to S3 arranged along the direction D and the spots S4 to S6 arranged along the direction D is smaller than a distance between the spot S1 and the spot S2 in the direction D.

In Example 1, the controller 41 may simultaneously set the subdivisions 33u1, 33u2, 33u3, 33u4, 33u5, and 33u6 to the first state, as illustrated in FIG. 6.

The subdivision 33u4 includes four switching elements 33a located adjacent to one another, as illustrated in FIG. 6. Each of the four switching elements 33a included in the subdivision 33u4 includes a part of the spot S4. The subdivision 33u3 and the subdivision 33u4 are in the same location with respect to the direction D. A distance between the subdivision 33u3 and the subdivision 33u4 in the direction C may be equal to or longer than a length of the spot S1 along the direction C.

The subdivision 33u5 includes four switching elements 33a located adjacent to one another, as illustrated in FIG. 6. Each of the four switching elements 33a included in the subdivision 33u5 includes a part of the spot S5. The subdivision 33u2 and the subdivision 33u5 are in the same location with respect to the direction D. A distance between the subdivision 33u2 and the subdivision 33u5 in the direction C may be equal to or longer than the length of the spot S1 along the direction C.

The subdivision 33u5 includes four switching elements 33a located adjacent to one another, as illustrated in FIG. 6. Each of the four switching elements 33a included in the subdivision 33u6 includes a part of the spot S6. The subdivision 33u1 and the subdivision 33u6 are in the same location with respect to the direction D. A distance between the subdivision 33u1 and the subdivision 33u6 in the direction C may be equal to or longer than the length of the spot S1 along the direction C.

The controller 41 may cause the switching unit 33 to sequentially form the spots S1 to S6 by controlling the radiation unit 10 and the scanner 20. In particular, the controller 41 may cause the radiation unit 10 to radiate electromagnetic waves three times at the predetermined intervals and, simultaneously, cause the scanner 20 to rotate about the axis 21 as illustrated in FIG. 2. By this configuration, the spots S1 to S3 can be formed on the switching unit 33. Then, the controller 41 causes the scanner 20 to rotate about the axis 22 as illustrated in FIG. 3. Further, the controller 41 causes the radiation unit 10 to radiate electromagnetic waves three times at the predetermined intervals and, simultaneously, causes the scanner 20 to rotate about the axis 21 as illustrated in FIG. 2. By this configuration, the spots S4 to S6 can be formed on the switching unit 33.

In a configuration illustrated in FIG. 6, the controller 41 may reduce or increase the number of the subdivisions 33u that are to be simultaneously set to the first state as described above with reference to FIG. 5.

### Example 2

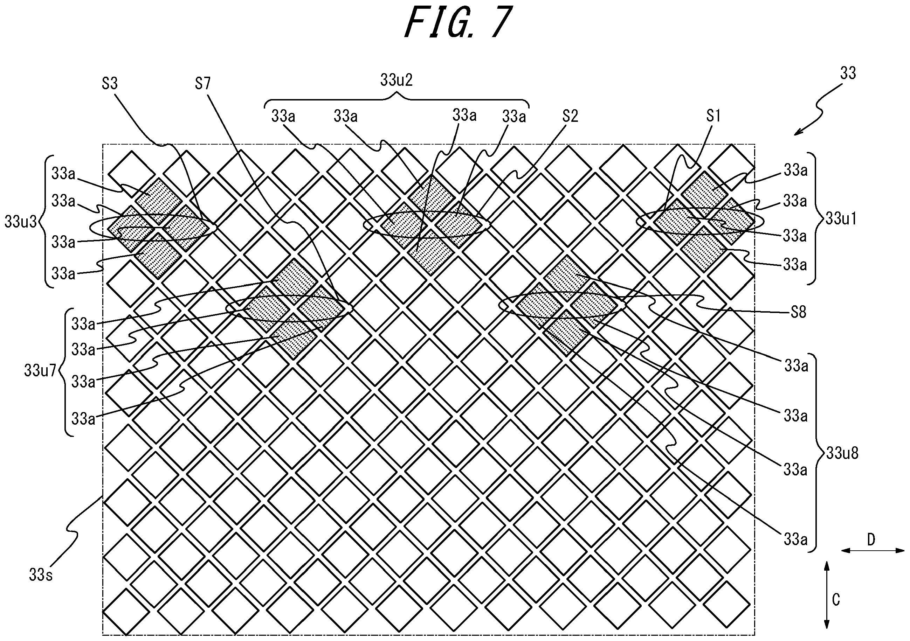

In Example 2, electromagnetic waves are radiated from the electromagnetic wave detection apparatus 1 to the object 2 so that spots S1, S2, S3, S7, and S8 are formed on the switching unit 33 as illustrated in FIG. 7. The spot S7 and the spot S8 are located apart from each other in the direction D. The spot S7 and the spot S8 are in the same location with respect to the direction C. The spot S7 is located between the spot S2 and the spot S3 in the direction D. The spot S8 is located between the spot S1 and the spot S2 in the direction D.

In Example 2, the controller 41 may simultaneously set the subdivisions 33u1, 33u2, 33u3, 33u7, and 33u8 to the first state.

As illustrated in FIG. 7, the subdivision 33u7 includes four switching elements 33a located adjacent to one another. Each of the four switching elements 33a included in the subdivision 33u7 includes a part of the spot S7. The subdivision 33u7 is located between the subdivision 33u2 and the subdivision 33u3 in the direction D. A part of the subdivision 33u7, a part of the subdivision 33u2, and a part of the subdivision 33u3 may overlap with one another in the direction C.

As illustrated in FIG. 7, the subdivision 33u8 includes four switching elements 33a located adjacent to one another. Each of the four switching elements 33a included in the subdivision 33u8 includes a part of the spot S8. The subdivision 33u8 is located between the subdivision 33u1 and the subdivision 33u2 in the direction D. A part of the subdivision 33u8, a part of the subdivision 33u1 and a part of the subdivision 33u2 may overlap with one another in the direction C.

In a configuration illustrated in FIG. 7, the controller 41 may cause the switching unit 33 to sequentially form the spots S1 to S3, S7, and S8 by controlling the radiation unit 10 and the scanner 20. In particular, the controller 41 causes the radiation unit 10 to radiate electromagnetic waves three times at predetermined intervals and, simultaneously, causes the scanner 20 to rotate about the axis 21 as illustrated in FIG. 2. By this configuration, the spots S1 to S3 can be formed on the switching unit 33. Then, the controller 41 causes the scanner 20 to rotate about the axis 22 as illustrated in FIG. 3. Further, the controller 41 causes the radiation unit 10 to radiate electromagnetic waves two times at predetermined intervals and, simultaneously, causes the scanner 20 to rotate about the axis 21 as illustrated in FIG. 2. By this configuration, the spots S7 and S8 can be formed on the switching unit 33.

In the configuration illustrated in FIG. 7, the controller 41 may reduce or increase the number of the subdivisions 33u that are to be simultaneously set to the first state as described above with reference to FIG. 5.

### Example 3

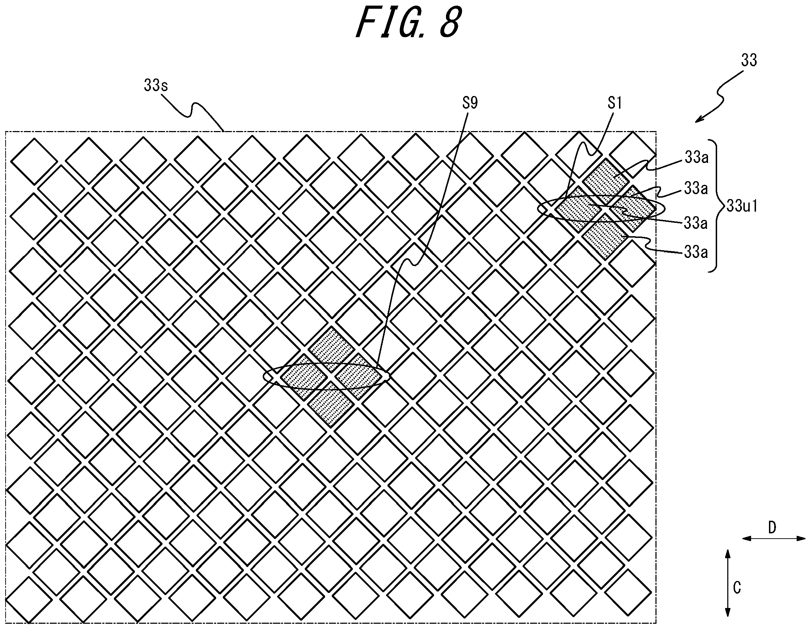

In Example 3, electromagnetic waves are radiated from the electromagnetic wave detection apparatus 1 to the object 2 so that the spot S1 and a spot S9 are formed on the switching unit 33 as illustrated in FIG. 8. The spot S1 and the spot S9 are located apart from each other along a direction inclined with respect to the direction D.

In Example 3, the controller 41 may simultaneously set the subdivisions 33u1 and 33u9 to the first state, as illustrated in FIG. 8.

The subdivision 33u9 includes four switching elements 33a located adjacent to one another, as illustrated in FIG. 8. Each of the four switching elements 33a included in the subdivision 33u9 includes a part of the spot S9. The subdivision 33u1 and the subdivision 33u9 are located apart from each other along the direction inclined with respect to the direction D serving as at least one direction of the reference surface 33s.

In a configuration illustrated in FIG. 8, the controller 41 may cause the switching unit 33 to sequentially form the spot S1 and the spot S9 by controlling the radiation unit 10 and the scanner 20. In particular, the controller 41 causes the radiation unit 10 to radiate electromagnetic waves one time. By this configuration, the spot S1 is formed on the switching unit 33. Also, the controller 41 causes the scanner 20 to rotate about the axis 21 and the axis 22 as respectively illustrated in FIG. 2 and FIG. 3. Further, the controller 41 causes the radiation unit 10 to radiate electromagnetic waves one time. By this configuration, the spot S9 is formed on the switching unit 33.

In the configuration illustrated in FIG. 8, the controller 41 may reduce or increase the number of the subdivisions 33u that are to be simultaneously set to the first state as described above with reference to FIG. 5.

### Surrounding Information Acquisition Operation

The controller 41 acquires information regarding the surroundings of the electromagnetic wave detection apparatus 1, based on electromagnetic waves detected by each of the first detector 35 and the second detector 36, that is, detection results by the first detector 35 and the second detector 36. The information regarding the surroundings is, for example, image information, distance information, temperature information, or the like. The controller 41 acquires the image information using the second detector 36. Further, the controller 41 acquires the distance information using the first detector 35, as will be described later.

For example, the controller 41 acquires the distance information using a ToF (Time-of-Flight) method. In this configuration, the controller 14 may include a time measurement LSI (Large Scale Integrated circuit). By using the time measurement LSI, the controller 41 measures a time ΔT from time at which the radiation unit 10 is caused to radiate electromagnetic waves to time at which the detection information is acquired by the first detector 35. The controller 41 calculates a distance to the irradiation position on the object 2 by multiplying the measured time ΔT by the speed of light and then dividing an acquired result by 2. The controller 41 calculates the irradiation position of electromagnetic waves, based on the direction information acquired from the scanner 20, the driving signal output to the scanner 20 by the controller 41, or a driving signal output to each of the radiation unit 10. The controller 41 acquires the distance information in the form of an image by calculating a distance to each irradiation position while changing the irradiation position of electromagnetic waves.

In the present embodiment, the electromagnetic wave detection apparatus 1 is configured to acquire distance information using Direct ToF that directly measures time from radiation of electromagnetic waves to return of the electromagnetic waves. However, the configuration of the electromagnetic wave detection apparatus 1 is not limited thereto. For example, the electromagnetic wave detection apparatus 1 may acquire distance information using Flash ToF that indirectly measures time from radiation of electromagnetic waves at fixed intervals to return of the electromagnetic waves, based on a phase difference between the radiated electronic waves and the returned electromagnetic waves. Alternatively, the electromagnetic wave detection apparatus 1 may acquire distance information using another ToF method such as, for example, Phased ToF.

Here, time required to scan the object 2 using electromagnetic waves can be restricted by the following time (1) to time (3): (1) time necessary for electromagnetic waves radiated from the radiation unit 10 to be reflected by the object 2 and incident on the first detector 35; (2) time necessary for the scanner 20 to rotate about the axis 21 illustrated in FIG. 2 or axis 22 illustrated in FIG. 3 to change a direction of electromagnetic waves radiated from the radiation unit 10; (3) time necessary for the switching unit 33 to switch the switching elements 33a to the first state or the second state. The time required to scan the object 2 using electromagnetic waves is most restricted by the time (3), from among the times (1) to (3).

In the electromagnetic wave detection apparatus 1 according to the present embodiment, the controller 41 simultaneously sets a plurality of subdivisions 33u located apart from one another along at least one direction (e.g., the direction D) of the reference surface 33s to the first state. The present embodiment having this configuration eliminates the necessity for the controller 41 to switch the switching elements 33a to the first state or the second state every time the radiation direction of electromagnetic waves is changed. In the present embodiment, in other words, the restriction by the time (3) described above can be reduced. The electromagnetic wave detection apparatus 1 according to the present embodiment having this configuration can efficiently scan across the object 2 using electromagnetic waves. The electromagnetic wave detection apparatus 1 according to the present embodiment can increase a quantity of information that can be acquired, for example, per unit time, by efficiently scanning across the object 2 using electromagnetic waves.

Although the embodiments according to the present disclosure have been described based on the figures and the examples, it should be apparent to those skilled in the art that various modifications and alterations can be made without departing from the present disclosure. Accordingly, such modifications and alterations are to be included in the scope of the present disclosure.

In the present embodiment, for example, the radiation unit 10, the scanner 20, the electromagnetic wave detector 30, the memory 40, and the controller 41 have been described to constitute the electromagnetic wave detection apparatus 1. However, the information acquisition system may be configured using an apparatus that includes the radiation unit 10 and the scanner 20 and an apparatus that includes the electromagnetic wave detector 30. The information acquisition system configured in this manner may further include the memory 40 and the controller 41.

In the present embodiment, the electromagnetic wave detection apparatus 1 has been described to include the radiation unit 10 and the scanner 20, as illustrated in FIG. 1. However, elements included in the electromagnetic wave detection apparatus 1 are not limited to the radiation unit 10 and the scanner 20. For example, the electromagnetic wave detection apparatus 1 may include a phased array, rather than the radiation unit 10 and the scanner 20. In this configuration, the electromagnetic wave detection apparatus 1 can perform grating scanning using the phased array.

In the present embodiment, the subdivision 33u has been described to include four switching elements 33a located adjacent to one another, as illustrated in FIG. 5. However, the number of the switching elements 33a included in the subdivision 33u is not limited to four. The subdivision 33u simply needs to include one switching element 33a.

In the present embodiment, the plurality of subdivisions 33u has been described to include the same number of the switching elements 33a, as illustrated in FIG. 5. However, the plurality of subdivisions 33u may include different number of the switching elements 33a.

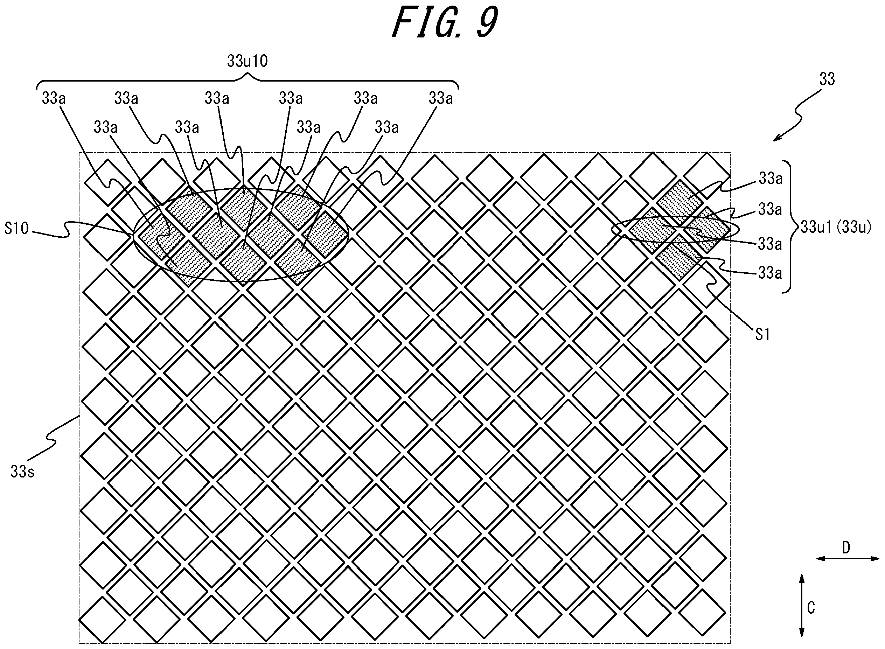

In the present embodiment, the spots S1 and the like formed on the switching unit 33 have been described to have the same shapes. However, the spots formed on the switching unit 33 do not need to have the same shapes. For example, spots S1 and S10 having different sizes may be formed, as illustrated in FIG. 9. An area of the spot S10 illustrated in FIG. 9 is approximately 2.5 times an area of the spot S1. In a configuration illustrated in FIG. 9, the controller 41 may simultaneously set the subdivision 33u1 and the subdivision 33u10 to the first state. The subdivision 33u10 includes ten switching elements 33a located adjacent to one another.

In the present embodiment, further, the switching unit 33 has been described to be able to switch a progression direction of electromagnetic waves incident on the reference surface 33s to two directions: the on direction d3 and the off direction d4. However, the switching unit 33 may be able to switch the progression direction to three or more directions, rather than any of the two directions.

In the present embodiment, further, the first state has been described to be the first reflection state for reflecting electromagnetic waves incident on the reference surface 33s in the on-direction d3, and the second state has been described to be the second reflection state for reflecting the electromagnetic waves incident on the reference surface 33s in the off-direction d4. However, the first state and the second state may refer to other modes.

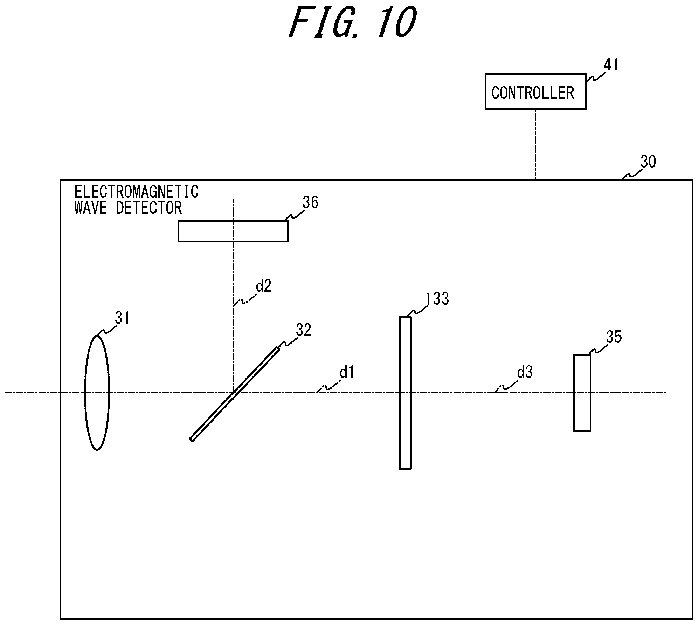

For example, the first state may be a transmission state in which electromagnetic waves incident on the reference surface 33s are transmitted to progress in the on-direction d3, as illustrated in FIG. 10. In this configuration, a switching unit 133 may include a shutter having a reflection surface that reflects electromagnetic waves in the off-direction d4 for each of the switching elements 33a. The switching unit 133 configured as described above switches each of the switching elements 33a between the transmission state serving as the first state and the reflection state serving as the second state, by opening and closing the shutter for each of the switching elements 33a.

An example of the switching unit 133 configured as described above includes a switching unit that includes a MEMS shutter in which a plurality of shutters that can be opened and closed are arranged in an array. Further, the switching unit 133 may be a switching unit that includes a liquid crystal shutter capable of switching between a reflection state for reflecting electromagnetic waves and a transmission state for transmitting electromagnetic waves, according to a liquid crystal alignment. The switching unit 133 configured as described above can switch between the reflection state serving as the first state and the transmission state serving as the second state for each of the switching elements 33a by switching the liquid crystal alignment for each of the switching elements 33a.

In the present embodiment, further, the electromagnetic wave detection apparatus 1 has been described to have a configuration in which the scanner 20 changes a direction of electromagnetic waves radiated from the radiation unit 10, and the first detector 35 functions as a scanning active sensor in cooperation with the scanner 20. However, the configuration of the electromagnetic wave detection apparatus 1 is not limited thereto. For example, in a case in which the electromagnetic wave detection apparatus 1 has a configuration in which the radiation unit 10 includes a plurality of radiation sources capable of radiating radial electromagnetic waves and employs a phased scanning method for radiating electromagnetic waves from each of the radiation sources at phased radiation timings, an effect similar to that of the present embodiment can be obtained. Further, for example, in a case in which the electromagnetic wave detection apparatus 1 has a configuration in which the scanner 20 is omitted and information is acquired by radiating radial electromagnetic waves from the radiation unit 10 without scanning, an effect similar to that of the present embodiment can be obtained.

In the present embodiment, further, the electromagnetic wave detection apparatus 1 has been described to include the first detector 35 as an active sensor and the second detector 36 as a passive sensor. However, the configuration of the electromagnetic wave detection apparatus 1 is not limited thereto. For example, in a case in which the electromagnetic wave detection apparatus 1 has a configuration in which both the first detector 35 and the second detector 39 serve as active sensors or passive sensors, an effect similar to that of the present embodiment can be obtained. In a configuration in which both the first detector 35 and the second detector 39 serve as active sensors, either the radiation unit 10 or respective radiation units 10 may radiate electromagnetic waves to the object 2. Further, the respective radiation units 10 may radiate electromagnetic waves of the same type or different types.

### REFERENCE SIGNS LIST

1 electromagnetic wave detection apparatus
10 radiation unit
12 optical system
20 scanner
30 electromagnetic wave detector
31 front-stage optical system
32 separator
33, 133 switching unit
33s reference surface
33a, 33a1, 33a2 switching element
33u, 33u1, 33u2, 33u3, 33u4, 33u5, 33u6, 33u7, 33u8, 33u9, 33u10 subdivision
34 rear-stage optical system
35 first detector
36 second detector
40 memory
41 controller
d1 progression direction
d2 progression direction (third direction)
d3 on-direction (first direction)
d4 off-direction (second direction)
S0, S1, S2, S3, S4, S5, S6, S7, S8, S9, S10 spot
A, B, C, D direction

## Claims

1. An electromagnetic wave detection apparatus comprising:
a switching unit including a plurality of subdivisions that are arranged on a reference surface and can be switched to a first state for causing incident electromagnetic waves to progress in a first direction;
a controller configured to simultaneously set some of the plurality of subdivisions located apart from one another along at least one direction of the reference surface, from among the plurality of subdivisions, to the first state; and
a first detector configured to detect electromagnetic waves progressing in the first direction.

2. The electromagnetic wave detection apparatus according to claim 1,
wherein a distance between the some of the plurality of subdivisions in the at least one direction in the reference surface is equal to or longer than a length of a spot of electromagnetic waves formed by the electromagnetic waves incident on the reference surface along the direction.

3. The electromagnetic wave detection apparatus according to claim 2,
wherein the spot has an elliptical shape, and
the at least one direction in the reference surface extends along a longitudinal direction of the spot having the elliptical shape.

4. The electromagnetic wave detection apparatus according to any one of claims 1 to 3,
wherein the some of the plurality of subdivisions include a plurality of switching elements that can be switched to the first state and are located adjacent to one another.

5. The electromagnetic wave detection apparatus according to claim 4,
wherein each of the some of the plurality of subdivisions include the same number of switching elements.

6. The electromagnetic wave detection apparatus according to claim 4 or 5,
wherein the switching elements included in the some of the plurality of subdivisions are arranged in a manner including a spot of electromagnetic waves formed on the subdivisions.

7. The electromagnetic wave detection apparatus according to any one of claims 1 to 3,
wherein the some of the plurality of subdivisions include one switching element that can be switched to the first state.

8. The electromagnetic wave detection apparatus according to any one of claims 4 to 6,
wherein the switching unit includes a digital micromirror device.

9. The electromagnetic wave detection apparatus according to any one of claims 4 to 6,
wherein the switching unit is configured to switch each of the switching elements between a transmission state for transmitting incident electromagnetic waves reflected by an object in the first direction and a reflection state for reflecting the incident electromagnetic waves in a second direction.

10. The electromagnetic wave detection apparatus according to claim 9,
wherein the switching unit includes a shutter having a reflection surface configured to reflect electromagnetic waves for each of the switching elements and is configured to switch between the reflection state and the transmission state by opening and closing the shutter for each of the switching elements.

11. The electromagnetic wave detection apparatus according to claim 10,
wherein the switching unit includes a MEMS shutter in which the shutters are arranged in an array.

12. The electromagnetic wave detection apparatus according to claim 9 or 10,
wherein the switching unit includes a liquid crystal shutter capable of switching between a reflection state for reflecting electromagnetic waves and a transmission state for transmitting electromagnetic waves, in accordance with a liquid crystal alignment.

13. The electromagnetic wave detection apparatus according to any one of claims 1 to 12, further comprising:
a separator configured to separate incident electromagnetic waves into electromagnetic waves to progress in a direction toward the switching unit and electromagnetic waves to progress in a third direction; and
a second detector configured to detect electromagnetic waves progressing in the third direction.

14. The electromagnetic wave detection apparatus according to claim 13,
wherein the separator includes at least one of a half mirror, a beam splitter, a dichroic mirror, a cold mirror, a hot mirror, and a metasurface.

15. The electromagnetic wave detection apparatus according to claim 13 or 14,
wherein each of the first detector and the second detector includes at least one of a distance measuring sensor, an image sensor, and a temperature sensor.

16. The electromagnetic wave detection apparatus according to any one of claims 13 to 15,
wherein the first detector and the second detector are configured to detect electromagnetic waves of the same type or different types.

17. The electromagnetic wave detection apparatus according to any one of claims 13 to 16,
wherein each of the first detector and the second detector are configured to detect at least one of infrared rays, visible rays, ultraviolet rays, and radio waves.

18. The electromagnetic wave detection apparatus according to any one of claims 13 to 17,
wherein each of the first detector and the second detector includes an active sensor configured to detect reflected waves of electromagnetic waves radiated to an object from a radiation unit and incident from the object, or a passive sensor.

19. The electromagnetic wave detection apparatus according to any one of claims 13 to 18,
wherein each of the first detector and the second detector includes an active sensor configured to detect reflected waves of electromagnetic waves that are radiated to an object from different radiation units or the same radiation unit and incident from the object.

20. The electromagnetic wave detection apparatus according to claim 19,
wherein each of the different radiation units radiate electromagnetic waves of different types or the same type.

21. The electromagnetic wave detection apparatus according to any one of claims 18 to 20, further comprising:
the radiation unit.

22. The electromagnetic wave detection apparatus according to any one of claims 18 to 21,
wherein the radiation unit is configured to radiate any one of infrared rays, visible rays, ultraviolet rays, and radio waves.

23. The electromagnetic wave detection apparatus according to any one of claims 18 to 22,
wherein the radiation unit is configured to scan using electromagnetic waves by employing a phased scanning method.

24. The electromagnetic wave detection apparatus according to any one of claims 18 to 23, further comprising:
a scanner configured to scan using electromagnetic waves radiated from the radiation unit.

25. The electromagnetic wave detecting apparatus according to claim 24,
wherein the scanner includes a reflection surface configured to reflect electromagnetic waves and is configured to scan by reflecting electromagnetic waves radiated from the radiation unit on the reference surface while changing a direction of the reflection surface.

26. The electromagnetic wave detection apparatus according to claim 24 or 25,
wherein the scanner includes any one of a MEMS mirror, a galvano mirror, and a polygon mirror.

27. The electromagnetic wave detection apparatus according to any one of claims 13 to 26,
wherein the controller is configured to acquire information regarding surroundings, based on detection results of electromagnetic waves by the first detector and the second detector.

28. The electromagnetic wave detection apparatus according to claim 27,
wherein the controller is configured to acquire at least one of image information, distance information, and temperature information, as the information regarding the surroundings.

29. An information acquisition system comprising:
a switching unit including a plurality of subdivisions that are arranged on a reference surface and can be switched to a first state for causing incident electromagnetic waves to progress in a first direction;
a controller configured to simultaneously set some of the plurality of subdivisions located apart from one another along at least one direction of the reference surface, from among the plurality of subdivisions, to the first state; and
a first detector configured to detect electromagnetic waves progressing in the first direction.
